# EUROPÄISCHE PATENTSCHRIFT

(11) **EP 3 289 938 B1**
(45) Veröffentlichungstag und Bekanntmachung des Hinweises auf die Patenterteilung: **04.08.2021**
(21) Anmeldenummer: 17187624.6
(22) Anmeldetag: 24.08.2017
(51) Int. Cl.: A47J 37/10, A47J 45/06

(54) **BRATVORRICHTUNG MIT EINEM HANDGRIFF UND EINEM BRATKÖRPER**
FRYING DEVICE WITH A HANDLE AND A FRYER BODY
POÊLE POURVUE D'UNE POIGNÉE ET D'UN CORPS

(30) Priorität: 25.08.2016 DE 102016115763; 29.12.2016 DE 202016107466 U
(43) Veröffentlichungstag der Anmeldung: 07.03.2018
(73) Patentinhaber: Dangel, Jürgen, 88512 Mengen-Rulfingen (DE)
(72) Erfinder: Dangel, Jürgen, 88512 Mengen-Rulfingen (DE)
(74) Vertreter: Otten, Roth, Dobler & Partner mbB Patentanwälte

(56) Entgegenhaltungen:
- US-A- 5 701 807
- US-A1- 2008 210 693
- US-B1- 8 881 644

## Beschreibung

Die Erfindung betrifft eine Bratvorrichtung mit einem Handgriff und einem Bratkörper nach dem Oberbegriff des Anspruchs 1.

### Stand der Technik

Bislang ist bereits unterschiedlichstes Kochgeschirr für die Zubereitung von Nahrungsmitteln gebräuchlich. So werden vor allem zum Braten unterschiedlichste Bratpfannen oder Töpfe verwendet. Üblicherweise zeichnen sich Bratpfannen vor allem dadurch aus, dass diese im Vergleich zu einem Topf relativ flach ausgebildet sind, das bedeutet, dass die Seitenwände der Bratpfanne niedriger sind, als bei einem relativ hohen Kochtopf.

Meist haben Bratpfannen auch einen vergleichsweise langen Handgriff, an dessen Ende der Bratkörper mit der Bratfläche angeordnet ist. Auch sind Kochtöpfe sowie Bratpfannen mit zwei Griffen bereits im Einsatz.

Zudem sind aus der US 2,204,467 sowie EP 0 766 942 A1 bereits Bratpfannen bekannt, wobei im Handgriff ein Vorratsspeicher für Öl vorhanden ist, das über eine Dosieröffnung in den Bratkörper bzw. auf die Bratfläche ausfliesen kann. Hiermit wird ein separates Einbringen eines Fettstückchens oder von Bratöl mittels einer separaten Vorratsflasche entbehrlich.

Diese Bratpfannen mit integrierter Bratölspeicherung haben sich jedoch auf dem Markt nicht durchgesetzt, da das Einbringen des Bratöles prinzipiell dem Einbringen des Bratöles mittels separater Vorratsflasche entspricht, jedoch ein regelmäßiges Nachfüllen des Speichers im Handgriff bedarf.

Zudem ist aus der US 2008/02 106 93 A1 eine Bratpfanne bekannt, wobei mittels druckbeaufschlagtem Wasserstoffgas eine Antihaft-Funktion der Pfanne realisiert wird. Wasserstoff ist jedoch hoch explosiv, so dass sich diese Technologie nie durchgesetzt hat.

### Aufgabe und Vorteile der Erfindung

Aufgabe der Erfindung ist es demgegenüber, eine Bratvorrichtung zum Braten von Nahrungsmitteln vorzuschlagen, die den Aufwand für den Benutzer reduziert, insbesondere den Komfort für den Benutzer und die Betriebssicherheit der Bratvorrichtung deutlich erhöht.

Diese Aufgabe wird, ausgehend von einer Bratvorrichtung der eingangs genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Bratvorrichtung dadurch aus, dass die Dosiereinheit zumindest drei Dosieröffnungen umfasst, wobei die Dosiereinheit wenigstens eine Verteilereinheit zum Verteilen des Brathilfsmittels umfasst, dass der Bratkörper und/oder wenigstens die Seitenwand zumindest die drei, auf zumindest 1/3 des Umfangs der Bratfläche angeordnete Dosieröffnungen aufweist, dass wenigstens ein Löschmittelspeicher zum Löschen eines Brandes vorgesehen ist und dass der Druckgasspeicher als Löschmittelspeicher ausgebildet ist.

Teilweise können sich das Nahrungsmittel und/oder das Brathilfsmittel beim Braten entzünden, was von Nachteil bzw. gefährlich ist. Derartige Brände innerhalb des Bratkörpers können durch ein vorteilhaftes Löschmittel ohne großen Aufwand gelöscht werden, was die Betriebssicherheit der Bratvorrichtung deutlich erhöht.

Gemäß der Erfindung ist der Druckgasspeicher als Löschmittelspeicher ausgebildet. So kann beispielsweise Kohlendioxid (CO₂) zum Löschen eines Brandes im Bratkörper verwendet werden. Dementsprechend kann das mit Druck beaufschlagte Kohlendioxid einerseits zum Löschen eines Brandes und andererseits zum Sprühen bzw. Vernebeln des Brathilfsmittels im Normalbetrieb bzw. beim Braten und/oder zum Reinigen verwendet werden. Durch die Doppel-/Mehrfachfunktion des Druckgasspeichers zugleich u.a. als Löschmittelspeicher wird sowohl der konstruktive Aufwand reduziert als auch die Funktionalität der Bratvorrichtung gemäß der Erfindung deutlich erhöht.

Generell können auch andere Fluide bzw. Gase zum Versprühen bzw. Vernebeln des Brathilfsmittels verwendet werden, z.B. Druckluft etc., und/oder die (zugleich) zum Löschen eines Brandes im Bratkörper geeignet sind.

Mit Hilfe einer erfindungsgemäßen Verteilereinheit mit zumindest drei und/oder mehreren, auf zumindest einem Drittel des Umfangs verteilt angeordneten Dosieröffnungen wird erreicht, dass das Brathilfsmittel, insbesondere Bratöl oder dergleichen, an zumindest drei bzw. mehreren separaten Stellen bzw. Bereichen/Abschnitten der Bratfläche und nicht nur an einer einzigen Stelle bzw. einem kleinen Bereich der Bratfläche eingebracht wird, d.h. wie beim Stand der Technik einerseits lediglich im Bereich des Handgriffes oder andererseits an genau der Stelle an der die Bratölflasche entleert wird bzw. ein Fettstück auf die Bratfläche aufgebracht wird. Demzufolge wird durch die vorteilhafte Verteilung bzw. die zumindest drei/mehreren Dosieröffnungen erreicht, dass sich das Brathilfsmittel, insbesondere Bratöl, über eine vergleichsweise große Fläche der gesamten Bratfläche verteilt bzw. gleichmäßiger aufgebracht wird. Durch die gleichmäßigere Verteilung des Brathilfsmittels, das vom Speicher im Handgriff in den Bratkörper bzw. auf die Bratfläche, insb. auf den Pfannenboden, entleert/eingebracht wird, reduziert sich der Aufwand für den Benutzer bzw. erhöht sich der Komfort für den Benutzer. Darüber hinaus wird ein besseres Bratergebnis, insbesondere eine schnelle, gleichmäßige Verteilung des Brathilfsmittels im Bratkörper bzw. auf der gesamten Bratfläche, insb. Pfannenboden erreicht, so dass sich das Braten des Nahrungsmittels verbessert.

Vorzugsweise weist die Verteilereinheit zumindest drei bzw. mehrere, auf zumindest zwei Drittel des Umfangs der Bratfläche angeordnete Dosieröffnungen des Bratkörpers und/oder der Seitenwand auf bzw. sind sogar mehrere, im Wesentlichen über den gesamten Umfang der Bratfläche angeordnete Dosieröffnungen vorgesehen. Hiermit wird die Verteilung des Brathilfsmittels über die gesamte Bratfläche weiter verbessert. So kann nicht nur eine besonders gleichmäßige Verteilung des Brathilfsmittels gemäß der Erfindung erreicht werden, sondern gerade aufgrund dieser besonders gleichmäßigen Verteilung kann auch die Menge des Brathilfsmittels reduziert/minimiert werden. So kann nahezu über die gesamte Bratfläche ein vergleichsweise dünner Brathilfsmittelfilm mit Hilfe der vorteilhaften, mehreren bzw. zahlreichen Dosieröffnungen gemäß der Erfindung realisiert werden. Dies führt zu einer besonders gesundheitlich vorteilhaften Zubereitung des Nahrungsmittels.

In einer besonderen Weiterbildung der Erfindung weist die Verteilereinheit und/oder die Seitenwand wenigstens einen Ringkanal auf. Im Sinn der Erfindung umfasst die Verteilereinheit in vorteilhafter Weise den wenigstens einen Ringkanal und zumindest die wenigstens drei bzw. mehreren Dosieröffnungen. Das bedeutet, dass der wenigstens eine Ringkanal in vorteilhafter Weise mit den wenigstens drei Dosieröffnungen (strömungstechnisch bzw. fluidisch) verbunden ist.

Mit Hilfe eines derartigen Ringkanals der Verteilereinheit und/oder der Seitenwand kann eine Zuführung des Brathilfsmittels zu den zumindest drei bzw. mehreren Dosieröffnungen, insbesondere die auf zwei Drittel oder im Wesentlichen auf dem gesamten Umfang der Bratfläche verteilt angeordnet sind, in vorteilhafter Weise erfolgen. So kann das Brathilfsmittel vom Handgriff bzw. vom Speicher im Handgriff durch den wenigstens einen Ringkanal, der vorzugsweise in der Seitenwand angeordnet ist, von außen bzw. umfangseitig über die Bratfläche verteilt werden. Das Einströmen bzw. Einfließen oder dergleichen des Brathilfsmittels über diese zumindest drei bzw. mehreren Dosieröffnungen, die außen bzw. umfangsseitig an der Bratfläche verteilt angeordnet sind, verbessert die gleichmäßige Verteilung des Brathilfsmittels, insbesondere des Bratöls oder dergleichen in besonderer Weise.

In einer besonderen Weiterbildung der Erfindung weist die Seitenwand wenigstens zwei, in vertikaler Richtung übereinander angeordnete Ringkanäle auf. Hiermit kann die Verteilung des Brathilfsmittels nochmals deutlich verbessert werden. Zum Beispiel können die wenigstens zwei oder mehrere und in vertikaler Richtung betrachtet übereinander in der Seitenwand auf unterschiedlichen Ebenen angeordnete Ringkanäle jeweils zumindest drei bzw. mehrere Dosieröffnungen aufweisen.

Vorzugsweise sind die zumindest drei bzw. mehrere Dosieröffnungen des unteren, ersten Ringkanals in Umfangsrichtung (betrachtet) versetzt zu den zumindest drei bzw. mehrere Dosieröffnungen des oberen bzw. darüber/benachbart angeordneten, zweiten bzw. weiteren Ringkanals angeordnet. So kann das umfangseitige Verteilen des Brathilfsmittels nochmals deutlich verbessert bzw. vergleichmäßigt bzw. besser verteilt/dosiert werden, was sich auf das Bratergebnis positiv auswirkt.

Vorzugsweise sind die Dosier- bzw. die Strömungsrichtungen des Brathilfsmittels der Ringkanäle, insb. des unteren, ersten Ringkanals und/oder des oberen bzw. darüber/benachbart angeordneten, zweiten bzw. weiteren Ringkanals, unterschiedlich ausgerichtet. Vorzugsweise ist die vertikale Neigung der Ringkanäle wenigstens teilweise unterschiedlich ausgerichtet und/oder einstellbar, insb. des unteren, ersten Ringkanals und/oder des oberen bzw. darüber/benachbart angeordneten, zweiten bzw. weiteren Ringkanals.

Vorteilhafterweise ist ein erster Winkel bzw. eine erste Neigung und/oder Dosier- bzw. Strömungsrichtung der Dosieröffnungen des oberen bzw. zweiten Ringkanals steiler als ein zweiter Winkel bzw. eine zweite Neigung und/oder Dosier- bzw. Strömungsrichtung der Dosieröffnungen des unteren bzw. ersten Ringkanals. Das bedeutet, dass ein etwas in vertikaler Richtung höherer bzw. oben angeordneter Ringkanal in vorteilhafter Weise von oben bzw. das Brathilfsmittel in vergleichsweise steiler bzw. relativ schräger Neigung in den Brat-/Innenraum bzw. auf die Bratfläche dosiert/eindüst bzw. einströmen lässt.

In einer bevorzugten Variante der Erfindung weist wenigstens eine der Dosieröffnungen, insbesondere alle Dosieröffnungen jeweils eine Sprühdüse zum Versprühen bzw. zum Vernebeln des Brathilfsmittels auf. Durch das Versprühen bzw. Vernebeln des Brathilfsmittels, insbesondere des Bratöls, wird eine besonders gleichmäßige Verteilung des Brathilfsmittels über der gesamten Bratfläche erreicht. So können beispielsweise bei vier, fünf, sechs oder mehreren Dosieröffnungen mit Spray-Funktion bzw. mit einer Spraydüse gemäß der Erfindung eine sehr gleichmäßige Einbringung des Brathilfsmittels über die gesamte Bratfläche erreicht werden. Hiermit wird die Menge des Brathilfsmittels, die notwendig ist um die gesamte Bratfläche gleichmäßig zu belegen, noch weiter reduzierbar. Auch kann durch das Einsprühen/Vernebeln des Brathilfsmittels während dem Braten ein vorteilhaftes Nachdosieren, insbesondere mit minimierten Mengen des Brathilfsmittel, dazu führen, dass die Zubereitung des Nahrungsmittels bzw. das Anbraten weiter verbessert wird und insbesondere sehr geringe Brathilfsmittelmengen verbraucht werden. Dies führt zu einer besonders schonenden bzw. gesundheitlich vorteilhaften Zubereitung des Nahrungsmittels ohne große Öl- bzw. Fettmengen oder dergleichen.

So ist erfindungsgemäß eine Druckerzeugungseinheit zum Druckbeaufschlagen des Brathilfsmittels für ein Versprühen bzw. Vernebeln vorgesehen. Beispielsweise kann es sich um eine mechanische Druckerzeugungseinheit, insbesondere eine mechanische, manuelle Pumpeinheit handeln, die beispielsweise am/im Handgriff angeordnet ist und vom Nutzer der Bratvorrichtung (beim Halten des Handgriffes) betätigt werden kann. So kann der Nutzer beispielsweise bei Halten der Bratvorrichtung jeweils einen Sprühdruck und somit ein Dosieren des Brathilfsmittels mit nur einer Hand generieren. Hierdurch ist die zweite Hand beispielsweise frei für einen Pfannenwender bzw. ein zusätzliches Kochhilfsmittel zum Wenden des Nahrungsmittels in der Bratpfanne oder dergleichen. Auch dies verbessert den Komfort für den Nutzer.

Mit Hilfe des erfindungsgemäßen Druckgasspeichers kann ein vergleichsweise hoher Druck zum Vernebeln/Verdüsen des Brathilfsmittels generiert werden, so dass besonders kleine Brathilfsmitteltröpfchen bzw. eine sehr feine Vernebelung des Brathilfsmittels realisiert werden können. Dies verbessert zusätzlich das Einbringen des Brathilfsmittels über die gesamte Bratfläche.

In einer vorteilhaften Variante der Erfindung wird ein auswechselbarer Druckgasspeicher verwendet, so dass nach dem Entleeren des Druckgasspeichers ein neuer Druckgasspeicher ohne großen Aufwand wieder verwendet werden kann. Vorzugsweise ist der Druckgasspeicher im Handgriff, insbesondere am Endabschnitt des Handgriffes angeordnet bzw. integriert, der dem Bratkörper bzw. der Bratfläche entgegengerichtet ist. Hierdurch kann beispielsweise der Druckgasspeicher durch eine stirnseitige Kappe, ein Deckel, insbesondere ein Rast- oder Schraubdeckel oder dergleichen, ausgetauscht bzw. ausgewechselt werden und in vorteilhafter Weise fixiert werden.

Gegebenenfalls ist wenigstens ein thermisches Isolierelement zum thermischen Isolieren des Drucksgasspeichers vorgesehen. Beispielsweise ist dies als eine Dämmschicht und/oder thermische Reflexionsschicht/-folie oder dergleichen ausgebildet. Hiermit kann der Druckgasspeicher in vorteilhafter Weise vor Wärme/Hitze geschützt und/oder das beim Entleeren auftretende Abkühlen des Druckgasspeichers kann gegenüber dem Handkontakt gedämmt/abgeschirmt werden, so dass beim Nutzer kein nachteiliges Kältegefühl am Handgriff entsteht.

Vorzugsweise ist wenigstens ein auswechselbarer Reinigungsmittelspeicher zur Reinigung der Verteileinheit und/oder Dosiereinheit vorgesehen. Hiermit wird erreicht, dass nach dem Braten des Nahrungsmittels eine vorteilhafte Reinigung realisierbar ist, insbesondere der Verteilereinheit einschließlich der Kanäle, Düsen oder dergleichen. So kann beispielsweise ein flüssiges Reinigungsmittel durch das Verteilersystem bzw. die Verteileinheit, Ringkanäle etc. hindurchströmen und somit eine vorteilhafte Reinigung/Entleerung des Verteilungssystems erreichen. So kann eine Reinigungsflüssigkeit z.B. Tenside oder dergleichen umfassen.

Darüber hinaus ist auch eine Reinigung mit Hilfe eines Reinigungsgases von Vorteil. So kann mit Hilfe von Druckluft, Kohlendioxid (CO₂) oder dergleichen mit vergleichsweise hoher Strömungsgeschwindigkeit des Brathilfsmittels aus dem Verteilersystem, Ringkanal, Dosieröffnungen bzw. Sprühdüse herausgedrängt bzw. gereinigt/entleert werden.

Auch kann beispielsweise der Durckgasspeicher gemäß der Erfindung zugleich als Reinigungsmittelspeicher ausgebildet werden. Beispielsweise kann mit Hilfe einer Betätigungsvorrichtung bzw. eines Bypasses oder dergleichen erreicht werden, dass in einem Reinigungsvorgang nicht Brathilfsmittels aus dem Speicher durch das Verteilersystem bzw. die Verteilereinheit, Ringkanals, Dosieröffnungen, Sprühdüsen hindurchströmen kann, sondern dass der Druckgasspeicher ein Reinigungs-/Druckgas durch das Verteilersystem hindurch strömen lässt, womit eine vorteilhafte Reinigung erreicht wird. Durch die Umgehung des Brathilfsmittelspeichers kann somit eine vorteilhafte Reinigung des Verteilersystems bzw. der Bratvorrichtung verwirklicht werden, ohne dass der Speicher ausgebaut/entfernt werden muss.

Alternativ zu der zuvor genannten "Bypass-Variante" kann auch für den Reinigungsvorgang der Speicher für das Brathilfsmittel aus dem Handgriff entnommen und durch einen entsprechenden Reinigungsmittelspeicher ersetzt werden, insbesondere kann hierbei auch der Druckgasspeicher ersetzt/entfernt werden. Hiermit wird ermöglicht, dass ein besonders großes Reinigungsvolumen zur Verfügung steht und somit eine vorteilhafte bzw. umfassende Reinigung des Verteilersystems realisierbar ist. Das heißt, dass der Reinigungsmittelspeicher den Bauraum des Speichers für das Brathilfsmittels und/oder für den Druckgasspeicher (innerhalb des Handgriffes) beanspruchen kann.

Vorzugsweise ist wenigstens ein Sensor, insb. Temperatur- bzw. Brand-Sensor, zur Erfassung eines Brandes und/oder einer Temperatur z.B. im Bratkörper vorgesehen. Beispielsweise kann durch einen Temperatursensor bzw. Thermometer oder dergleichen festgestellt werden, dass in der Pfanne bzw. im Bratkörper die Gefahr eines Brandes bzw. eine zu hohe Temperatur besteht, so dass ein Löschen hierdurch (automatisiert oder manuell) ausgelöst und/oder mittels eines Signal- oder Anzeigeelementes angezeigt/signalisiert wird. Beispielsweise kann eine Noteinheit vorgesehen werden, insbesondere ein Notknopf, die/der beispielsweise bei einem Brand im Bratkörper vom Nutzer betätigt/gedrückt wird, so dass das Löschmittel aus dem Löschmittelspeicher in vorteilhafter Weise in den Bratkörper, insbesondere über die Verteilereinheit gemäß der Erfindung, eingebracht werden kann.

Vorteilhafterweise ist eine erste Temperatur bzw. eine Warntemperatur vorgesehen, wobei ein Warnsignal mittels eines Signal- oder Anzeigeelementes angezeigt/signalisiert wird. Bevorzugt ist ein Signaltongenerator wie ein Signalhorn oder dergleichen zur Erzeugung eines Signaltons vorgesehen. Hiermit wird erreicht, dass in vorteilhafter Weise ein strömendes Gas wie Luft und/oder Druckgas zur Tongenerierung verwendbar ist. Von besonderem Vorteil ist, eine Signaltoneinheit vorzusehen, die den Druckgasspeicher und ein Signaltongenerator umfasst. So kann der Druckgasspeicher zusätzlich zur akustischen Warnung/Signalisierung einer Beeinträchtigung bzw. einer Brandgefahr oder eines Brandes verwendet werden. Durch diese vorteilhafte fluidische bzw. pneumatische Signalisierung kann auf elektrische Komponenten wie Signalleuchten und elektrische Batterien etc. verzichtet werden.

Beispielsweise ist eine Umgehung bzw. ein Bypass oder dergleichen vorgesehen, wobei zum Löschen eines Brandes das Löschmittel durch die Verteileinheit bzw. das Verteilersystem mit Ringkanal, Dosieröffnungen, Sprühdüsen, etc. ohne Brathilfsmittel eingebracht/eingeströmt wird. Gegebenenfalls kann der Sensor das Löschen aktivieren, wenn dieser beispielsweise eine Temperatur von ca. 400°C erfasst. Auch kann das Löschmittel zugleich als Reinigungsmittel im Sinn der Erfindung ausgebildet werden.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: einen schematischen Schnitt durch eine erste Bratvorrichtung gemäß der Erfindung,
- Figur 2: eine schematische Draufsicht auf die erste Bratvorrichtung während dem Verdüsen von Brathilfsmittel,
- Figur 3: einen schematischen Schnitt durch eine zweite Bratvorrichtung gemäß der Erfindung,
- Figur 4: eine schematischen Schnitt durch eine dritte Bratvorrichtung gemäß der Erfindung während dem Verdüsen von Brathilfsmittel,
- Figur 5: einen schematischen Schnitt durch eine vierte Bratvorrichtung gemäß der Erfindung,
- Figur 6: eine schematische Draufsicht auf die vierte Bratvorrichtung gemäß Figur 5 während dem Verdüsen von Brathilfsmittel und
- Figur 7: eine schematische Draufsicht auf die vierte Bratvorrichtung gemäß Figur 5 von Brathilfsmittel.

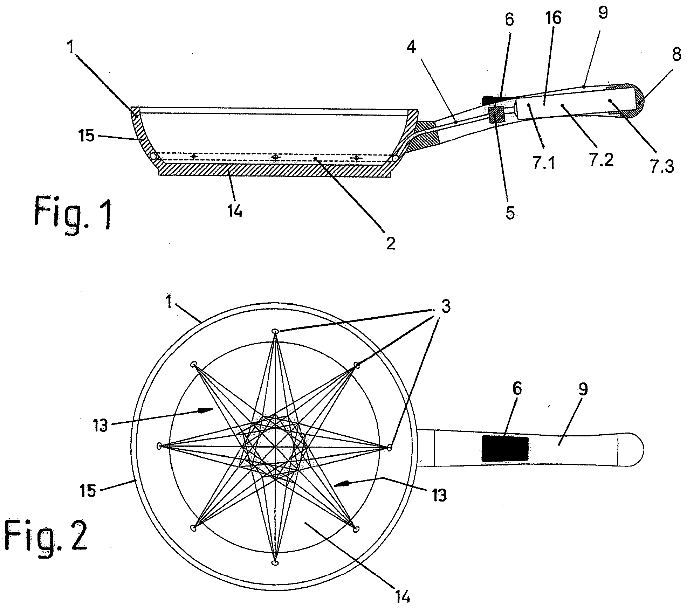

In den Figuren sind verschiedene Bratpfannen dargestellt, die im Wesentlichen einen Pfannenkörper 1 sowie einen Handgriff 9 aufweisen. Der Pfannenkörper 1 weist eine Ringleitung 2 auf, die in einer Seitenwand 15 des Pfannenkörpers 1 integriert ist. Die Seitenwand 15 erhebt sich über eine Bratfläche 14 eines Pfannenbodens 14, wobei die Ringleitung 2 und/oder Dosieröffnungen 3 bzw. Düsen 3 gemäß der Varianten der Figuren 1 bis 3 knapp über dem Pfannenboden 14 bzw. der Bratfläche 14 angeordnet sind.

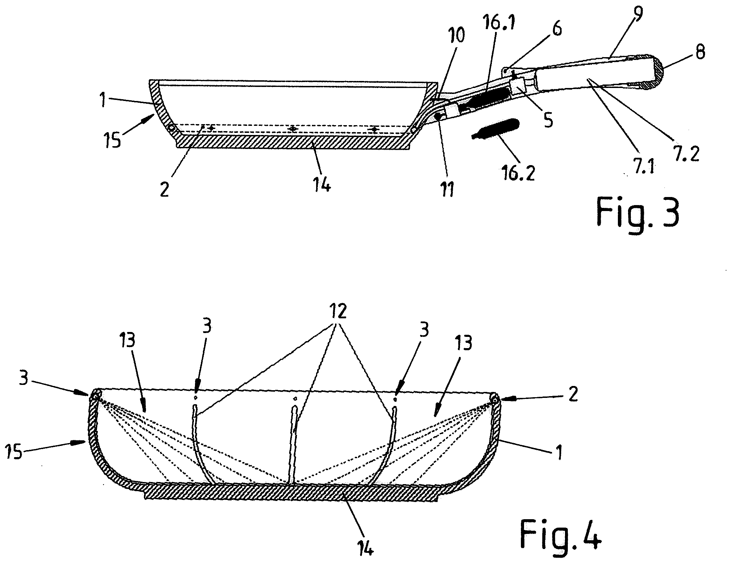

In einer alternativen Variante gemäß Figur 4 ist die Ringleitung 2 und/oder Dosieröffnungen 3 bzw. Düsen 3 dagegen nicht knapp über dem Pfannenboden 14 bzw. der Bratfläche 14 angeordnet, sondern im oberen Bereich der Seitenwand 15 und/oder am oberen Rand/Ende der Seitenwand 15. Diese zuletzt genannte Variante weist Vorteile bzgl. der Herstellung und den Kosten auf. Das hat u.a. auch zur Folge, dass ein Sprühstrahl 13 vorteilhafterweise von oben auf das Bratgut bzw. den Pfannenboden 14 trifft. Von den Dosieröffnungen bzw. Düsen 3 abtropfendes Sprühöl gelangt in vorteilhafter Weise über (auf das Zentrum bzw. den Mittelpunkt gerichtete und/oder sternförmig angeordnete/ausgebildete) Leitelemente wie z.B. Nuten, Rillen, offene Kanäle wie konkav eingearbeitete Abtropfrillen 12 oder Erhebungen, Stege oder dergleichen auf den Pfannenboden 14 bzw. die Bratfläche 14, wo es von dort aus pfannenbodenseitig das Bratgut "bedienen" kann. Das bedeutet, dass das Öl vollständig bzw. optimal zum Braten verwendet bzw. ausgenützt wird und somit das Braten bzw. "fettarme" Braten effizienter gestaltet.

Generell ist anzumerken, dass der Pfannenboden 14 im Wesentlichen die Bratfläche 14 bildet, jedoch durchaus auch Teile/Abschnitte bzw. Flächen der Seitenwand 15 als Bratfläche wirken.

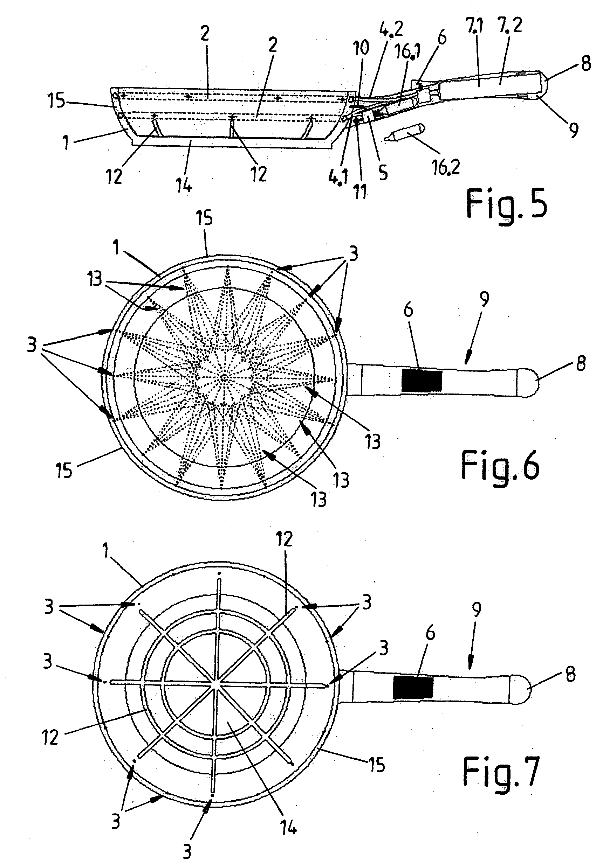

Vorzugsweise sind die Dosieröffnungen 3 bzw. Düsen 3 nahezu gleichmäßig bzw. symmetrisch am Umfang der Bratfläche 14 bzw. der Seitenwand 15 angeordnet, das heißt insbesondere über den gesamten Umfang der Seitenwand 15 gleichmäßig verteilt wie dies z.B. bei den Ausführungsbeispielen gemäß Figur 2 und 6 deutlich wird.

Gemäß der vierten Variante der Erfindung (vgl. Figuren 5 bis 7) sind nicht nur ein o.g. Ringkanal 2 mit mehreren Dosieröffnungen 3 bzw. Düsen 3 vorhanden, sondern in vorteilhafter Weise zwei in vertikaler Richtung übereinander angeordneter Ringkanäle 2 mit beispielsweise insgesamt 16 Düsen 3 bzw. 16 Dosieröffnungen 3. Die Seitenwand 12 des Pfannenkörpers 1 umfasst diese beiden Ringkanäle 2.

Das bedeutet, dass die beiden abgebildeten Rindüsensysteme bzw. Ringkanäle 2 in zwei unterschiedlichen Ebenen angeordnet sind. Die Dosieröffnungen 3 bzw. Düsen 3 der beiden Ringkanäle 2 sind zudem in vorteilhafter Weise (in Umfangsrichtung betrachtet) um ca. 22,5° zueinander versetzt angeordnet. Zudem können die Dosieröffnungen 3 bzw. Düsen 3 in vertikaler Richtung betrachtet unterschiedliche Dosier- bzw. Ausströmrichtungen, d.h. Neigungen bzw. Winkel, aufweisen, so dass das Bratöl 13 bzw. die Sprühstrahlen 13 unterschiedlich steil in den Innenraum bzw. auf die Bratfläche bzw. den Pfannenboden 14 und somit auf das nicht näher dargestellte Bratgut treffen.

Die Dosieröffnungen 3 bzw. Düsen 3 der unteren und/oder oberen Ringleitung 2 können z.B. etwas zum Pfannenboden 14 geneigt ausgebildet werden, damit das gesprühte Würzöl entlang der Sammel-/Ablaufkanäle 12 (vgl. Figur 7) auf den Pfannenbodengrund 14 fließen kann. Das Brathilfsmittel wie ein Würzöl oder dergleichen kann dadurch zusätzlich vom Pfannenbodengrund 12 auf das Bratgut einwirken.

Weiterhin können die Dosieröffnungen 3 bzw. Düsen 3 der unteren und/oder oberen Ringleitung 2 in Bezug zur horizontalen Ebene unterschiedlich ausgerichtet/geneigt werden, so dass das Brathilfsmittel wie ein Würzöl oder dergleichen in unterschiedlicher Weise/Richtung bzw. Auftreffstellen auf das Bratgut einwirken kann. Beispielsweise können die Dosieröffnungen 3 bzw. Düsen 3 des oberen Ringkanals 2 relativ stark geneigt bzw. steil ausgerichtet werden, wie z.B. gemäß der dritten Variante in Figur 4). Dagegen können die Dosieröffnungen 3 bzw. Düsen 3 des unteren Ringkanals 2 leichter bzw. weniger stark geneigt, d.h. relativ flach ausgerichtet werden.

In den dargestellten Ausführungsbeispielen ist der Ringkanal 2 als geschlossener, durchgängiger Ringkanal 2 ausgebildet. Darüber hinaus ist jedoch auch denkbar, dass es sich beim Ringkanal 2 nicht um einen geschlossenen, durchgehenden Ring handelt, sondern um einen Ringkanal, der insbesondere auf der dem Handgriff 9 gegenüberliegenden Seite nicht vollständig geschlossen bzw. unterbrochen ausgebildet ist. Dies kann beispielsweise bei einer Verteilung der Düsen 3 über einen Bereich von etwa zwei Drittel des Umfangs durchaus von Vorteil sein.

Wie vor allem in den Figuren 1, 3 und 5 deutlich wird, umfasst der Handgriff 9 einen Speicher bzw. eine (mit Druck beaufschlagte) Kartusche 7 und/oder Druckgaspatrone 16, wobei gemäß Variante der Figur 1 ein einziger druckbeaufschlagter Speicher 7, 16 zur Speicherung eines Betriebsmittels, insbesondere des Brathilfsmittels wie Bratöl, Gewürzöl oder dergleichen vorgesehen ist und vorzugsweise unter Druck von einigen Bar steht. Hierbei wird das Betriebsmittel mittels eines vorteilhaften Dosierknopfes 6 bzw. einer Dosiervorrichtung, die ein Ventil 5 betätigt bzw. öffnet und schließt, in eine Zuleitung 4 bzw. einen Kanal des Handgriffs 9 dem Pfannenkörper 1 zugeführt bzw. zudosiert. Die Zuleitung 4 mündet in den Ringkanal 2 und dieser in die Dosieröffnungen 3 bzw. Düsen 3 des Pfannenkörpers 1.

In vorteilhafter Weise weist die Kartusche 7 eine Druckbeaufschlagung auf, so dass durch Drücken des Dosierknopfes 6 das Ventil 5 betätigt/geöffnet wird und das Betriebsmittel 13, insbesondere das Brathilfsmittel 13 wie Öl oder dergleichen, über die Zuleitung 4 in den Ringkanal 2 einströmt und über die Düsen 3 (wie in Figur 2 oder 4 veranschaulicht) in vorteilhafter Weise in den Innenraum/Innenbereich des Pfannenkörpers 2 eingesprüht bzw. vernebelt wird.

Bei den Varianten gemäß Figur 3 oder 5 bis 7 sind jeweils zwei separate Speicher 7, 16 vorgesehen, wobei eine Kartusche 7 mit Betriebsmittel/-öl 13 bzw. Gewürzöl und/oder Reinigungsflüssigkeit/-mittel und zudem im Handgriff 9 eine Druckgaspatrone 16 vorhanden ist.

Gerade die Figuren 2, 4 und 6 verdeutlichen, dass das Brathilfsmittel 13 bzw. das Bratöl 13 vergleichsweise großflächig und gleichmäßig in den Bratkörper 1 bzw. auf die Bratfläche 14 verteilt wird. Im Gegensatz zu einem Einbringen von Bratöl bzw. Bratfett mittels einer separaten Ölflasche oder einem einzigen Bratfettstück wird gemäß der Erfindung eine besonders großflächige bzw. gleichmäßige und somit vorteilhafte Verteilung des Bratöls bzw. Brathilfsmittels erreicht. Hiermit kann die Menge, die in den Pfannenkörper 1 eingebracht wird, deutlich reduziert werden, ohne dass dies Nachteile für das Braten des Nahrungsmittels bedeuten würde.

Bei der Kartusche 7 bzw. dem Speicher 7, 16 im Handgriff 9 handelt es sich in vorteilhafter Weise um eine auswechselbare Kartusche 7 bzw. Druckgaspatrone 16 (vgl. Ersatzkartusche 16.1 gemäß Figur 3 oder 5), die beispielsweise mit Hilfe eines abnehmbaren/abschraubbaren Verschlussknopfs 8 bzw. einen Schraubdeckel in den Handgriff 9 eingebracht werden können. Der Verschlussknopf 8 ist beispielsweise mittels einem Schraubgewinde ausgestattet, so dass die Kartusche 7 beispielsweise im Bereich des Ventiles 5 durch das Anschrauben des Verschlussknopfes 8 sicher und fest fixiert und vorteilhaft abgedichtet wird. Die Druckgaspatrone 16 kann z.B. über einen separaten Zugang ausgewechselt werden, der auf der Unterseite des Handgriffes 9 vorgesehen ist.

Durch die Auswechselbarkeit der Druckgaspatrone 16 und/oder Kartusche 7 kann beispielsweise eine Betriebsmittelkartusche 7.1 im Handgriff 9 während dem Normalbetrieb bzw. dem Braten verwendet werden. Zum Reinigen kann beispielsweise eine Reinigungskartusche 7.2 im Handgriff 9 platziert/eingesetzt werden. Darüber hinaus kann es sich bei der Kartusche 7 auch um eine Löschkartusche 7.3 handeln, die ein Löschmittel, insbesondere Kohlenstoffdioxid umfasst.

Die Verwendung der Druckgaspatrone 16 und/oder der Kartuschen 7 ist in den Figuren lediglich schematisch dargestellt, wobei in der dargestellten Variante gemäß Figur 1 lediglich eine einzige Kartusche 7 im Handgriff 9 abgebildet ist.

Alternativ können z.B. auch zwei separate Speicher bzw. Kartuschen 7 im Handgriff 9 verwendet werden (vgl. Figur 3), wobei beispielsweise eine (drucklose) Bratölkartusche 7.1 im unmittelbaren Bereich des Ventiles 5 bzw. Dosierknopfes 6 angeordnet ist und vorzugsweise im Endbereich des Handgriffes 9, das heißt dem Abschnitt des Handgriffes 9 der dem Pfannenkörper gegenüberliegend angeordnet ist, kann eine zweite Kartusche 7, insbesondere eine Druckgaskartusche bzw. Druckgaspatrone 16, angeordnet werden. In diesem Fall wird in vorteilhafter Weise beim Betätigen des Dosierknopfes 6 bzw. beim Öffnen des Ventils 5 in vorteilhafter Weise das Brathilfsmittel bzw. das Bratöl des (drucklosen) Bratölspeichers bzw. der Bratölkartusche 7.1 mit dem Druckgas, insbesondere Kohlenstoffdioxid oder dergleichen, beaufschlagt werden und durch das Verteilersystem bzw. durch die Zuleitung 4 und den Ringkanal 2 zu den Düsen 3 transportiert und verdüst/verteilt werden. Durch den vergleichsweise hohen Druck des Druckgases wird das Bratöl 13 mittels der Düsen 3 in vorteilhafter Weise fein verteilt bzw. versprüht/vernebelt in den Pfannenkörper 1 eingebracht.

Darüber hinaus kann (ohne nähere Darstellung) in einer besonderen Weiterbildung der Erfindung ein separater bzw. zweiter Betätigungsknopf, insbesondere ein Notknopf bzw. Löschknopf, am/im Handgriff 9 angeordnet werden, der beispielsweise einen als Löschmittelspeicher 16 ausgebildeter Kohlenstoffdioxid-Druckgasspeicher 16 bzw. eine Löschkartusche 7.3 bzw. die Druckgaspatrone 16 im Handgriff 9 betätigt/aktiviert, so dass im Brandfall ein schnelles und wirkungsvolles Löschen im Pfannenkörper 1 gewährleistet ist. Hierbei kann in vorteilhafter Weise, beispielsweise mittels einer Umleitung bzw. eines Bypasses oder dergleichen, das Löschmittel bzw. das Kohlenstoffdioxidgas (ohne Bratöl) durch die Zuleitung 4 in den Ringkanal 2 und durch die Düsen 3 in den Pfannenkörper 1 eingebracht werden, so dass der Brand sehr schnell und wirkungsvoll gelöscht wird. Dies erhöht die Betriebssicherheit der Bratvorrichtung gemäß der Erfindung in erheblichem Maß.

In Figur 3 oder 5 ist u.a. jeweils ein Temperatursensor 10 dargestellt, der eine Temperatur des Pfannenkörper 1 bzw. in/an dessen Inneren oder dessen Seitenwand 15 in vorteilhafter Weise erfassen kann. Vorzugsweise ist der Temperatursensor 10 als Bimetall-Element, Wärmedehnungselement oder dergleichen ausgebildet, so dass in vorteilhafter Weise eine elektrische Energieversorgung/-speicherung etc. für einen elektrischen Sensor entfallen kann.

Vorteilhafterweise bewirkt der Temperatursensor 10 z.B. bei einer ersten Temperatur, insb. einer Warntemperatur, dass ein Warnsignal/Warnton von einem akustischen Signalgeber/Signalhorn 11 generiert wird. Hierbei wird vorzugsweise mittels der Druckgaspatrone 16 Druckgas dem Signalgeber/Signalhorn 11 zugeleitet/geführt, so dass das strömende Gas ein Signalton bzw. möglichst schrillen Ton erzeugt bzw. von sich gibt. Dies warnt eine Person in vorteilhafter Weise, dass eine Überhitzung und/oder eine Brandgefahr besteht.

Bei einer zweiten Temperatur, insb. einer im Vergleich zur ersten höheren Temperatur/Brandtemperatur, wird in vorteilhafter Weise ein Löschvorgang generiert. Hierbei wird vorzugsweise mittels der Druckgaspatrone 16 Löschgas bzw. Druckgas dem Pfannenkörper 1 bzw. in dessen Inneren zugeleitet/geführt, so dass wie bereits oben etwas dargelegt das Gas den Brand löscht. Somit kann ein zweistufiges Sicherheitskonzept/-system realisiert werden, nämlich in einer ersten Stufe wird ein Warnton bzw. eine Warnung verwirklicht und in einer zweiten Stufe wird ein Brand gelöscht. Dies führt zu einer außergewöhnlichen und neuen Sicherheitspfanne gemäß der Erfindung.

### Bezugszeichenliste

- 1: Pfannenkörper
- 2: Ringleitung
- 3: Düse
- 4: Zuleitung
- 5: Ventil
- 6: Dosierknopf
- 7: Kartusche
- 8: Verschlussknopf
- 9: Handgriff
- 10: Temperatursensor
- 11: Signalgeber
- 12: Kanal
- 13: Sprühstrahl
- 14: Pfannenboden
- 15: Seitenwand
- 16: Druckgaspatrone

## Patentansprüche

1. Bratvorrichtung zum Braten von Nahrungsmitteln, wobei wenigstens ein Handgriff (9) sowie ein eine Bratfläche (14) und eine Seitenwand (15) aufweisender Bratkörper (1) zur Aufnahme der Nahrungsmittel vorgesehen sind, wobei der Handgriff (9) wenigstens einen Speicher (7) zum Speichern eines Brathilfsmittels (13) wie Öl, Fett oder dergleichen und wenigstens eine Dosiereinheit zum Dosieren des Brathilfsmittels (13) aufweist, wobei wenigstens ein Druckgasspeicher (7) zur Druckbeaufschlagung des Brathilfsmittels (13) vorgesehen ist, **dadurch gekennzeichnet, dass** die Dosiereinheit zumindest drei Dosieröffnungen (3) umfasst, wobei die Dosiereinheit wenigstens eine Verteilereinheit (2) zum Verteilen des Brathilfsmittels (13) umfasst, dass der Bratkörper (2) und/oder wenigstens die Seitenwand (15) zumindest die drei, auf zumindest 1/3 des Umfangs der Bratfläche (14) angeordnete Dosieröffnungen (3) aufweist, dass wenigstens ein Löschmittelspeicher (7.3) zum Löschen eines Brandes vorgesehen ist und dass der Druckgasspeicher (7) als Löschmittelspeicher (7.3) ausgebildet ist.

2. Bratvorrichtung nach Anspruch 1, **dadurch gekennzeichnet, dass** die Verteilereinheit (2) wenigstens drei, im Wesentlichen über den gesamten Umfang der Bratfläche (14) angeordnete Dosieröffnungen (3) des Bratkörpers (1) und/oder der Seitenwand (15) aufweist.

3. Bratvorrichtung nach einem der vorgenannten Ansprüche, **dadurch gekennzeichnet, dass** die Verteilereinheit (2) wenigstens einen Ringkanal (2) aufweist.

4. Bratvorrichtung nach einem der vorgenannten Ansprüche, **dadurch gekennzeichnet, dass** die Seitenwand (15) wenigstens einen Ringkanal (2) aufweist.

5. Bratvorrichtung nach einem der vorgenannten Ansprüche, **dadurch gekennzeichnet, dass** die Seitenwand (15) wenigstens zwei, in vertikaler Richtung übereinander angeordnete Ringkanäle (2) aufweist.

6. Bratvorrichtung nach einem der vorgenannten Ansprüche, **dadurch gekennzeichnet, dass** wenigstens eine der Dosieröffnungen (3) eine Spraydüse zum Versprayen bzw. Vernebeln des Brathilfsmittels (13) aufweist.

7. Bratvorrichtung nach einem der vorgenannten Ansprüche, **dadurch gekennzeichnet, dass** wenigstens ein auswechselbarer Reinigungsmittelspeicher (7.2) zur Reinigung der Verteilereinheit (2) und/oder Dosiereinheit vorgesehen ist.

8. Bratvorrichtung nach einem der vorgenannten Ansprüche, **dadurch gekennzeichnet, dass** wenigstens ein Sensor (10) zur Erfassung einer Temperatur und/oder eines Brandes vorgesehen ist.

## Claims

1. A frying device for frying food, wherein at least one handle (9) and a fryer body (1) having a frying surface (14) and a side wall (15) for receiving the food are provided, wherein the handle (9) has at least one reservoir (7) for storing a frying aid (13) such as oil, fat or the like and at least one dosing unit for dosing the frying aid (13), wherein at least one pressurised gas reservoir (7) for pressurising the frying aid (13) is provided, **characterised in that** the dosing unit comprises at least three dosing openings (3), wherein the dosing unit comprises at least one distribution unit (2) for distributing the frying aid (13), **in that** the fryer body (2) and/or at least the side wall (15) has at least the three dosing openings (3), arranged over at least 1/3 of the circumference of the frying surface (14), **in that** at least one extinguishing agent reservoir (7.3) is provided for extinguishing a fire, and **in that** the pressurised gas reservoir (7) is designed as an extinguishing agent reservoir (7.3).

2. The frying device according to claim 1, **characterised in that** the distribution unit (2) has at least three dosing openings (3) of the fryer body (1) and/or the side wall (15), said openings being arranged substantially over the entire circumference of the frying surface (14).

3. The frying device according to one of the preceding claims, **characterised in that** the distribution unit (2) has at least one annular channel (2).

4. The frying device according to one of the preceding claims, **characterised in that** the side wall (15) has at least one annular channel (2).

5. The frying device according to one of the preceding claims, **characterised in that** the side wall (15) has at least two annular channels (2) arranged one above the other in the vertical direction.

6. The frying device according to one of the preceding claims, **characterised in that** at least one of the dosing openings (3) has a spray nozzle for spraying or misting the frying aid (13).

7. The frying device according to one of the preceding claims, **characterised in that** at least one replaceable cleaning agent reservoir (7.2) is provided for cleaning the distribution unit (2) and/or the dosing unit.

8. The frying device according to one of the preceding claims, **characterised in that** at least one sensor (10) is provided for detecting a temperature and/or a fire.

## Revendications

1. Poêle permettant de cuire des aliments, dans laquelle au moins une poignée (9), ainsi qu'un corps (1) comportant une surface de cuisson (14) et une paroi latérale (15), permettent de recevoir les aliments, dans laquelle la poignée (9) comporte au moins un réservoir de stockage (7) pour stocker un adjuvant de cuisson (13) tel que de l'huile, de la matière grasse ou analogue et au moins une unité de dosage pour doser l'adjuvant de cuisson (13), dans laquelle au moins un réservoir de gaz sous pression (7) permet d'appliquer une pression à l'adjuvant de cuisson (13), **caractérisée en ce que** l'unité de dosage comprend au moins trois ouvertures de dosage (3), dans laquelle l'unité de dosage comprend au moins une unité de distribution (2) pour distribuer l'adjuvant de cuisson (13), **en ce que** le corps (2) et/ou au moins la paroi latérale (15) comportent les au moins trois ouvertures de dosage (3) disposées sur au moins 1/3 de la circonférence de la surface de cuisson (14), **en ce qu'**au moins un réservoir d'agent extincteur (7.3) permet d'éteindre un incendie et **en ce que** le réservoir de gaz sous pression (7) est conçu sous la forme d'un réservoir d'agent extincteur (7.3).

2. Poêle selon la revendication 1, **caractérisée en ce que** l'unité de distribution (2) comporte au moins trois ouvertures de dosage (3) du corps (1) et/ou de la paroi latérale (15) disposés sensiblement sur toute la circonférence de la surface de cuisson (14).

3. Poêle selon l'une quelconque des revendications précédentes, **caractérisée en ce que** l'unité de distribution (2) comporte au moins un canal annulaire (2).

4. Poêle selon l'une quelconque des revendications précédentes, **caractérisée en ce que** la paroi latérale (15) comporte au moins un canal annulaire (2).

5. Poêle selon l'une quelconque des revendications précédentes, **caractérisée en ce que** la paroi latérale (15) comporte au moins deux canaux annulaires (2) disposés l'un au-dessus de l'autre dans le sens vertical.

6. Poêle selon l'une quelconque des revendications précédentes, **caractérisée en ce que** l'au moins une des ouvertures de dosage (3) comporte une buse de pulvérisation pour pulvériser ou atomiser l'adjuvant de cuisson (13).

7. Poêle selon l'une quelconque des revendications précédentes, **caractérisée en ce qu'**au moins un réservoir de détergent (7.2) remplaçable permet de nettoyer l'unité de distribution (2) et/ou l'unité de dosage.

8. Poêle selon l'une quelconque des revendications précédentes, **caractérisée en ce qu'**au moins un capteur (10) permet de détecter une température et/ou un incendie.
